# EUROPEAN PATENT APPLICATION

(11) **EP 1 628 095 A2**
(43) Date of publication of application: **22.02.2006**
(21) Application number: 05001447.1
(22) Date of filing: 25.01.2005
(51) Int. Cl.: F25B 27/00

(54) **Air conditioning system combined with an electricity generating system**

(30) Priority: 17.08.2004 KR 2004064814
(71) Applicant: LG ELECTRONICS INC., Seoul 150-010 (KR)
(72) Inventor: Kang, Seung Tak, Seoul 153-010 (KR); Choi, Chang Min, Kwanak-ku Seoul-si 151-055 (KR); Choi, Won Jae, Kwangjin-ku Seoul 143-210 (KR); Lim, Hyung Soo, Yongsan-ku Seoul 140-030 (KR); Hwang, Yoon Jei, Yongdeungpo-ku Seoul-si 151-010 (KR)
(74) Representative: Urner, Peter

(57) **Abstract**

An electricity generating and air conditioning system including a first generator coupled to the output shaft of the engine to generate electricity, a turbo charger to be operated by exhaust gas discharged from the engine, and thus, to enhance the power of the engine, and a second generator coupled to the turbo charger to generate electricity, so that it is possible to achieve an enhancement in energy efficiency.

## Description

### BACKGROUND OF THE INVENTION

### Field of the Invention

The present invention relates to an electricity generating and air conditioning system which generates electricity, using an engine, and uses the electricity in an air conditioner, and, more particularly, to an electricity generating and air conditioning system in which exhaust gas generated during an electricity generating operation of an engine is used to again generate electricity.

### Description of the Related Art

In general, electricity generating and air conditioning systems generate electricity by use of a rotating force outputted from an engine, and operate an air conditioner by use of the generated electricity. Such electricity generating and air conditioning systems are mainly used for multi-type air conditioners or large-scale air conditioners.

Such electricity generating and air conditioning systems include an engine, a generator connected to an output shaft of the engine to generate electricity, and an air conditioner, which is operated, using the electricity generated from the generator.

However, such a conventional electricity generating and air conditioning system has a problem in that exhaust gas generated during an electricity generating operation of an engine is discharged to the atmosphere without being again used for generation of electricity, so that the system exhibits a low energy efficiency.

### SUMMARY OF THE INVENTION

The present invention has been made in view of the above-mentioned problems, and it is an object of the invention to provide an electricity generating and air conditioning system wherein a turbo charger is mounted to an engine, to improve the power of the engine, and exhaust gas generated during an electricity generating operation of the engine is used to again generate electricity, so that the system exhibits an enhanced energy efficiency.

In accordance with one aspect, the present invention provides an electricity generating and air conditioning system comprising: an engine; a first generator connected to an output shaft of the engine to generate electricity; a turbo charger including a turbine to be rotated by exhaust gas discharged from the engine; a second generator connected to the turbine to generate electricity; and an air conditioner, which uses the electricity generated from at least one of the first and second generators and includes a compressor, an indoor heat exchanger, an expansion device, and an outer heat exchanger.

In accordance with another aspect, the present invention provides an electricity generating and air conditioning system comprising: an engine; a first generator connected to an output shaft of the engine to generate electricity; a turbo charger including a turbine to be rotated by exhaust gas discharged from the engine; an electricity-generating turbine to be rotated by the exhaust gas emerging from the turbo charger; a second generator connected to the electricity-generating turbine to generate electricity; and an air conditioner, which uses the electricity generated from at least one of the first and second generators and includes a compressor, an indoor heat exchanger, an expansion device, and an outer heat exchanger.

In accordance with another aspect, the present invention provides an electricity generating and air conditioning system comprising: an engine; a first generator connected to an output shaft of the engine to generate electricity; an electricity-generating turbine to be rotated by exhaust gas discharged from the engine; a second generator connected to the electricity-generating turbine to generate electricity; and an air conditioner, which uses the electricity generated from at least one of the first and second generators and includes a compressor, an indoor heat exchanger, an expansion device, and an outer heat exchanger.

The electricity generating and air conditioning system may further comprise a heater to heat a refrigerant passing through a suction line of the compressor or a discharge line of the compressor, using the electricity generated from at least one of the first and second generators.

The electricity generating and air conditioning system may further comprise exhaust gas waste heat recovering means to recover heat of the exhaust gas discharged from the engine and to heat a refrigerant passing through a discharge line of the compressor, using the recovered heat.

The electricity generating and air conditioning system may further comprise cooling water waste heat recovering means to recover heat of cooling water used to cool the engine and to pre-heat air blown to the outdoor heat exchanger, using the recovered heat.

The air conditioner may be a heat pump type air conditioner.

At least one of the engine, the first generator, the second generator, the outdoor heat exchanger, and the indoor heat exchanger may comprise a plurality of ones.

The electricity generating and air conditioning system according to the present invention has an advantage in that the first generator coupled to the output shaft of the engine generates electricity, the turbo charger is operated by exhaust gas discharged from the engine, to enhance the power of the engine, and the second generator coupled to the turbo charger generates electricity, so that it is possible to achieve an enhancement in energy efficiency.

In the electricity generating and air conditioning system according to the present invention, the first generator coupled to the output shaft of the engine generates electricity. The turbo charger is operated by exhaust gas discharged from the engine, to enhance the power of the engine. Also, the exhaust gas used to operate the turbo charger also may rotate the electricity-generating turbine, so that the second generator coupled to the electricity-generating turbine generates electricity. Accordingly, it is possible to minimize the load of the turbo charger and to achieve an enhancement in energy efficiency.

The electricity generating and air conditioning system according to the present invention also has an advantage in that heat of the exhaust gas discharged from the engine is recovered, and is supplied to the discharge line of the compressor, to heat a refrigerant passing through the compressor discharge line, so that an improvement in the heating performance of the indoor heat exchanger is achieved.

The electricity generating and air conditioning system according to the present invention also has an advantage in that heat of cooling water used to cool the engine is recovered to pre-heat air blown to the outdoor heat exchanger, so that it is possible to prevent the outdoor heat exchanger from being frosted, and to achieve an enhancement in heating performance.

The electricity generating and air conditioning system according to the present invention includes a heater to pre-heat a refrigerant passing through the suction line of the compressor, using the electricity generated from at least one of the first and second generators, so that it is possible to enhance the heating performance of the indoor heat exchanger or to reduce the power consumption of the compressor in accordance with the pre-heating operation of the pre-heater.

### BRIEF DESCRIPTION OF THE DRAWINGS

The above objects, and other features and advantages of the present invention will become more apparent after reading the following detailed description when taken in conjunction with the drawings, in which:
FIG. 1 is a schematic diagram of an electricity generating and air conditioning system according to a first embodiment of the present invention, illustrating a state in which the system operates in a heating mode;
FIG. 2 is a schematic diagram of the electricity generating and air conditioning system according to the first embodiment of the present invention, illustrating a state in which the system operates in a cooling mode;
FIG. 3 is a schematic diagram of an electricity generating and air conditioning system according to a second embodiment of the present invention, illustrating a state in which the system operates in a heating mode;
FIG. 4 is a schematic diagram of the electricity generating and air conditioning system according to the second embodiment of the present invention, illustrating a state in which the system operates in a cooling mode;
FIG. 5 is a schematic diagram of an electricity generating and air conditioning system according to a third embodiment of the present invention, illustrating a state in which the system operates in a heating mode;
FIG. 6 is a schematic diagram of the electricity generating and air conditioning system according to the third embodiment of the present invention, illustrating a state in which the system operates in a cooling mode;
FIG. 7 is a schematic diagram of an electricity generating and air conditioning system according to a fourth embodiment of the present invention, illustrating a state in which the system operates in a heating mode;
FIG. 8 is a schematic diagram of the electricity generating and air conditioning system according to the fourth embodiment of the present invention, illustrating a state in which the system operates in a cooling mode;
FIG. 9 is a schematic diagram of an electricity generating and air conditioning system according to a fifth embodiment of the present invention, illustrating a state in which the system operates in a heating mode;
FIG. 10 is a schematic diagram of an electricity generating and air conditioning system according to a sixth embodiment of the present invention, illustrating a state in which the system operates in a heating mode;
FIG. 11 is a schematic diagram of an electricity generating and air conditioning system according to a seventh embodiment of the present invention, illustrating a state in which the system operates in a heating mode;
FIG. 12 is a schematic diagram of an electricity generating and air conditioning system according to an eighth embodiment of the present invention, illustrating a state in which the system operates in a heating mode;
FIG. 13 is a schematic diagram of an electricity generating and air conditioning system according to a ninth embodiment of the present invention, illustrating a state in which the system operates in a heating mode;
FIG. 14 is a schematic diagram of an electricity generating and air conditioning system according to a tenth embodiment of the present invention, illustrating a state in which the system operates in a heating mode; and
FIG. 15 is a schematic diagram of an electricity generating and air conditioning system according to an eleventh embodiment of the present invention, illustrating a state in which the system operates in a heating mode.

### DESCRIPTION OF THE PREFERRED EMBODIMENTS

Hereinafter, exemplary embodiments of an electricity generating and air conditioning system according to the present invention will be described with reference to the annexed drawings.

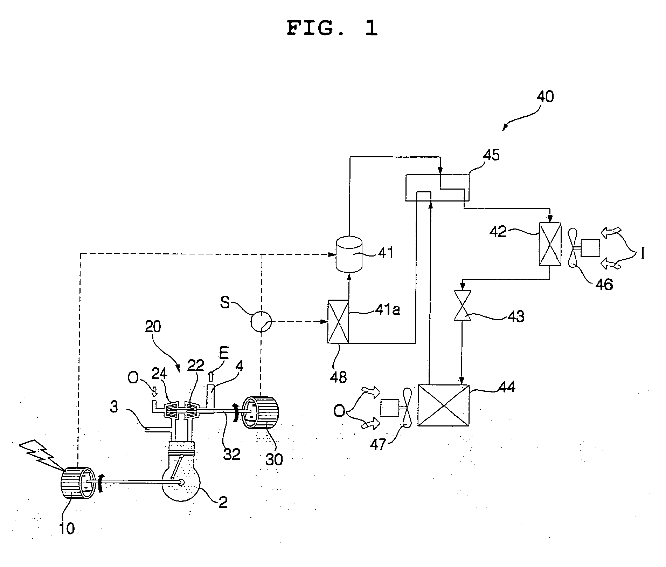

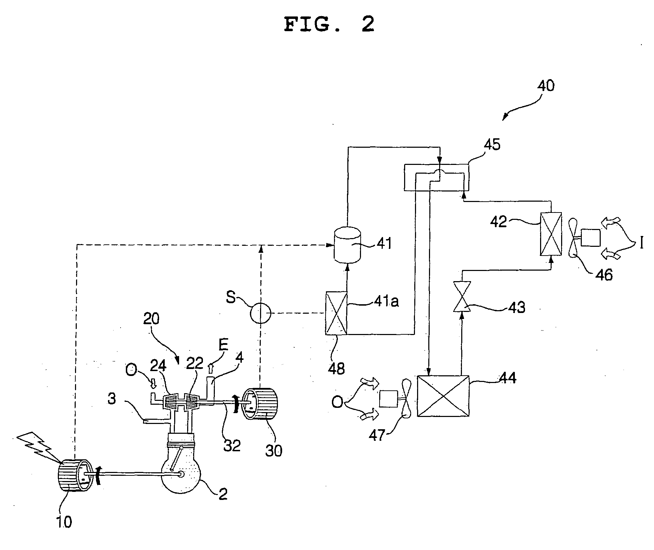

FIG. 1 is a schematic diagram of an electricity generating and air conditioning system according to a first embodiment of the present invention, illustrating a state in which the system operates in a heating mode. FIG. 2 is a schematic diagram of the electricity generating and air conditioning system according to the first embodiment of the present invention, illustrating a state in which the system operates in a cooling mode.

As shown in FIGS. 1 and 2, the electricity generating and air conditioning system includes an engine 2, a first generator 10 connected to an output shaft of the engine 2 to generate electricity, a turbo charger 20, which includes a turbine 22 to be rotated by exhaust gas discharged from the engine 2, a second generator 30 connected to the turbine 22 to generate electricity, and an air conditioner 40, which uses the electricity generated from at least one of the first and second generators 10 and 30.

The engine 2 includes a combustion chamber defined in the interior of the engine 2.

A fuel tube 3 and an exhaust tube 4 are connected to the engine 2. The fuel tube 3 is adapted to supply fuel such as liquefied gas or liquefied petroleum gas into the combustion chamber. The exhaust tube 4 is adapted to guide exhaust gas discharged from the combustion chamber.

The first generator 10 may be an AC generator or a DC generator.

The turbine 22 is connected to the exhaust tube 4 such that the turbine 22 is rotated by the exhaust gas passing through the exhaust tube 4. In addition to the turbine 22, the turbo charger 20 includes a compressor 24 coupled to the turbine 22 to supply outdoor air O into the fuel tube 3.

The second generator 30 may be an AC generator or a DC generator. The second generator 30 has a rotating shaft 32 coupled to the turbine 22.

The air conditioner 40 may be an air conditioner used only for heating purposes, which includes a compressor 41, an inner heat exchanger 42, an expansion device 43, and an outdoor heat exchanger 44. Alternatively, the air conditioner 40 may be a heat pump type air conditioner, which includes a directional valve 45 in addition to the configuration including the compressor 41, inner heat exchanger 42, expansion device 43, and outdoor heat exchanger 44, so that the air conditioner is switchable between a heating mode and a cooling mode. The following description will be given only in conjunction with the case in which the air conditioner 40 is a heat pump type air conditioner.

In a heating operation of the heat pump type air conditioner 40, refrigerant, which has been compressed in the compressor 41, flows through the directional valve 45, indoor heat exchanger 42, expansion device 43, outdoor heat exchanger 44, and directional valve 45, in this order, and then enters the compressor 41, as shown in FIG. 1. Thus, the refrigerant is circulated. In this operation, the outdoor heat exchanger 44 functions as an evaporator, whereas the indoor heat exchanger 42 functions as a condenser, and thus, discharges heat to indoor air.

On the other hand, in a cooling operation of the heat pump type air conditioner 40, refrigerant, which has been compressed in the compressor 41, flows through the directional valve 45, outdoor heat exchanger 44, expansion device 43, indoor heat exchanger 42, and directional valve 45, in this order, and then enters the compressor 41, as shown in FIG. 2. Thus, the refrigerant is circulated. In this operation, the outdoor heat exchanger 44 functions as a condenser, whereas the indoor heat exchanger 42 functions as an evaporator, and thus, absorbs heat from indoor air.

The electricity generating and air conditioning system according to this embodiment further includes a heater 48 to pre-heat a refrigerant passing through a suction line 41a of the compressor 41, using the electricity generated from at least one of the first and second generators 10 and 30.

In accordance with one method, the electricity generated from the first generator 10 and the electricity generated from the second generator 30 may be collected so that the collected electricity may be distributed to the compressor 41 and heater 48.

In accordance with another method, the electricity generated from one of the first and second generators 10 and 30, for example, the first generator 10, may be used to drive the compressor 41, and the electricity generated from the other generator, for example, the second generator 30, may be used to operate the heater 48.

In accordance with another method, the electricity generated from one of the first and second generators 10 and 30, for example, the first generator 10, may be used to drive the compressor 41, and the electricity generated from the other generator, for example, the second generator 30, may be used to operate a selected one of the compressor 41 and heater 48 in accordance with whether the heat pump type air conditioner 20 operates in a cooling mode or in a heating mode.

For the electricity distribution according to the third method, the electricity feed line of the other one of the first and second generators 10 and 30, for example, the electricity feed line of the second generator 30, is selectively connected to the compressor 41 and heater 48 via an electricity supply switch S. In this case, the electricity generated from the second generator 30 is supplied to the heater 48 via the electricity supply switch S in a heating operation of the heat pump type air conditioner 20. On the other hand, in a cooling operation of the heat pump type air conditioner 20, the electricity from the second generator 30 is supplied to the compressor 41 via the electricity supply switch S.

For convenience of description, the following description will be given only in conjunction with the case in which the electricity generated from the other one of the first and second generators 10 and 30, for example, the electricity feed line of the second generator 30, is supplied to the heater 48 in the heating operation of the heat pump type air conditioner 20, and is supplied to the compressor 41 in the cooling operation of the heat pump type air conditioner 20.

Reference numeral 46 designates an indoor fan to blow indoor air I to the indoor heat exchanger 42, and reference numeral 47 designates an outdoor fan to blow outdoor air O to the outdoor heat exchanger 44.

Hereinafter, operation of the electricity generating and air conditioning system having the above-described arrangement will be described.

When fuel is supplied into the engine 2 via the fuel tube 3, and the engine 2 is subsequently driven, the output shaft of the engine 2 is rotated, thereby causing the first generator 10 to generate electricity.

Exhaust gas E discharged from the engine 2 rotates the turbine 22 of the turbo charger 20 while passing through the exhaust tube 4, and is then discharged to the atmosphere. The turbine 22 of the turbo charger 20 drives the compressor 24, and rotates the rotating shaft 32 of the second generator 30.

During the operation of the compressor 24, outdoor air O is compressed, and is then sucked into a combustion chamber of the engine 2. Thus, a sufficient amount of air is supplied into the combustion chamber of the engine 2, so that the temperature of the sucked air is lowered, thereby causing the fuel in the combustion chamber to be completely combusted. Accordingly, it is possible to achieve an enhancement in the power of the engine 2, and a reduction in the amount of fumes contained in the exhaust gas E.

The second generator 30 generates electricity in accordance with the rotation of the rotating shaft 32.

In a heating operation of the heat pump type air conditioner 40, the directional valve 45 is switched to a heating mode, as shown in FIG. 1. In this case, the compressor 41 and heater 48 are driven, using the electricity generated from the first and second generators 10 and 30.

The compressor 41 compresses low-temperature and low-pressure refrigerant gas, thereby changing the refrigerant gas into a high-temperature and high-pressure state. The compressed high-temperature and high-pressure refrigerant gas releases heat into the indoor heat exchanger 42 while passing through the indoor heat exchanger 42 via the directional valve 45, so that the indoor heat exchanger 42 releases the absorbed heat therearound, thereby increasing indoor temperature.

Thus, the refrigerant performs heat exchange with indoor air while passing through the indoor heat exchanger 42, so that the refrigerant is condensed. The refrigerant is then introduced into the suction line 41a of the compressor 41 after passing through the expansion device 43, outdoor heat exchanger 44, and directional valve 45, in this order.

The refrigerant introduced into the suction line 41a of the compressor 41 is pre-heated by the heater 48, and is then circulated through the compressor 41. Thus, the refrigerant is repeatedly circulated.

Since the refrigerant is repeatedly pre-heated by the heater 48 prior to the repeated circulation, it is possible to enhance the heating performance of the indoor heat exchanger 42 or to reduce the power consumption of the compressor 41.

On the other hand, in a cooling operation of the air conditioner 40, the directional valve 45 is switched to a cooling mode. In this case, the compressor 41 is driven, using the electricity generated from the first and second generators 10 and 30, whereas the heater 48 is stopped.

The compressor 41 compresses low-temperature and low-pressure refrigerant gas, thereby changing the refrigerant gas into a high-temperature and high-pressure state. As shown in FIG. 2, the compressed high-temperature and high-pressure refrigerant gas passes through the outdoor heat exchanger 44 via the directional valve 45, and then absorbs heat from indoor air while passing through the indoor heat exchanger 42 via the expansion device 43, so that the refrigerant is evaporated. Thereafter, the refrigerant is circulated into the compressor via the directional valve 45.

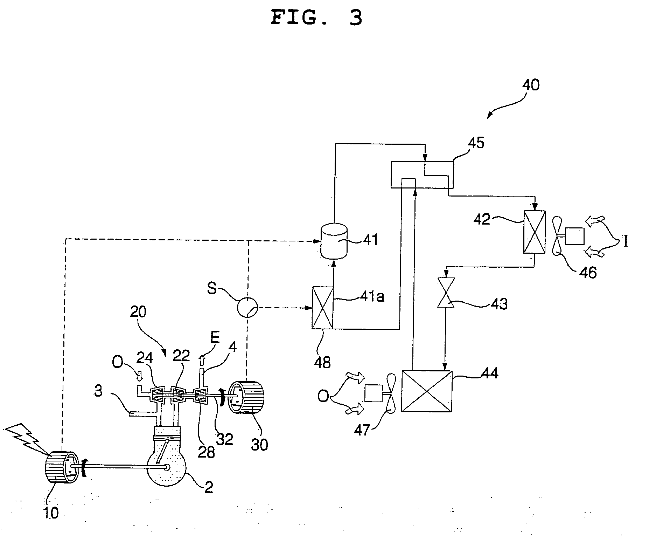

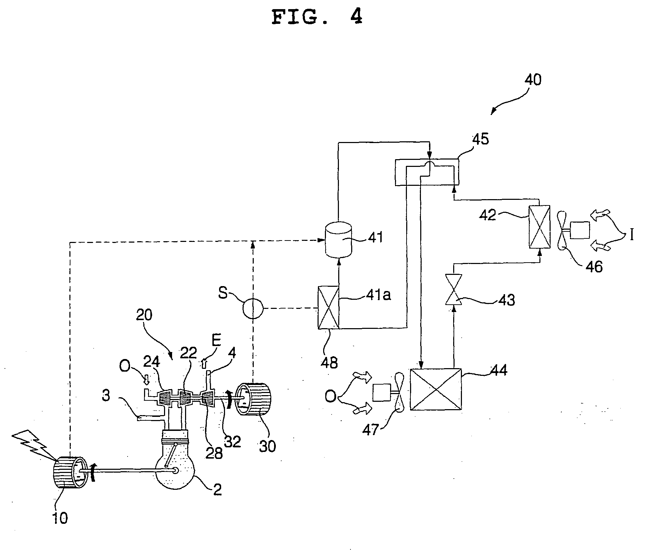

FIG. 3 is a schematic diagram of an electricity generating and air conditioning system according to a second embodiment of the present invention, illustrating a state in which the system operates in a heating mode. FIG. 4 is a schematic diagram of the electricity generating and air conditioning system according to the second embodiment of the present invention, illustrating a state in which the system operates in a cooling mode.

As shown in FIGS. 3 and 4, the electricity generating and air conditioning system includes an engine 2, a first generator 10 connected to an output shaft of the engine 2 to generate electricity, a turbo charger 20, which includes a turbine 22 to be rotated by exhaust gas discharged from the engine 2, an electricity-generating turbine 28 to be rotated by the exhaust gas emerging from the turbo charger 20, a second generator 30 connected to the electricity-generating turbine 28 to generate electricity, and an air conditioner 40, which uses the electricity generated from at least one of the first and second generators 10 and 30.

The electricity-generating turbine 28 is arranged downstream from the turbine 22 of the turbo charger 20 with respect to a flowing direction of the exhaust gas so that the electricity-generating turbine 28 is rotated by the exhaust gas emerging from the turbine 22 of the turbo charger 20 after rotating the turbine 22.

The second generator 30 has a rotating shaft 32 coupled to the electricity-generating turbine 28.

When fuel is supplied into the engine 2 via a fuel tube 3, and the engine 2 is subsequently driven in the electricity generating and air conditioning system having the above-described arrangement, the output shaft of the engine 2 is rotated, thereby causing the first generator 10 to generate electricity.

Exhaust gas E discharged from the engine 2 rotates the turbine 22 of the turbo charger 20 while passing through the exhaust tube 4.

In accordance with the rotation of the turbine 22, the compressor 24 is driven, so that outdoor air O is compressed by the compressor 24, and is then supplied into a combustion chamber of the engine 2.

The exhaust gas E, which emerges from the turbine 22 of the turbo charger 20 after rotating the turbine 22, is discharged to the atmosphere after rotating the electricity-generating turbine 28. The electricity-generating turbine 28 rotates the rotating shaft 32 of the second generator 30.

The second generator 30 generates electricity in accordance with the rotation of the rotating shaft 32.

The electricity generating and air conditioning system according to this embodiment further includes a heater 48 to pre-heat a refrigerant passing through a suction line 41a of the compressor 41, using the electricity generated from at least one of the first and second generators 10 and 30.

The electricity generating and air conditioning system of the second embodiment has the same configuration and functions as those of the first embodiment, in terms of the engine 2, first generator 10, turbo charger 20, air conditioner 40, electricity supply switch S, etc. Accordingly, the constituent elements of the second embodiment respectively corresponding to those of the first embodiment are designated by the same reference numerals, and no detailed description thereof will be given.

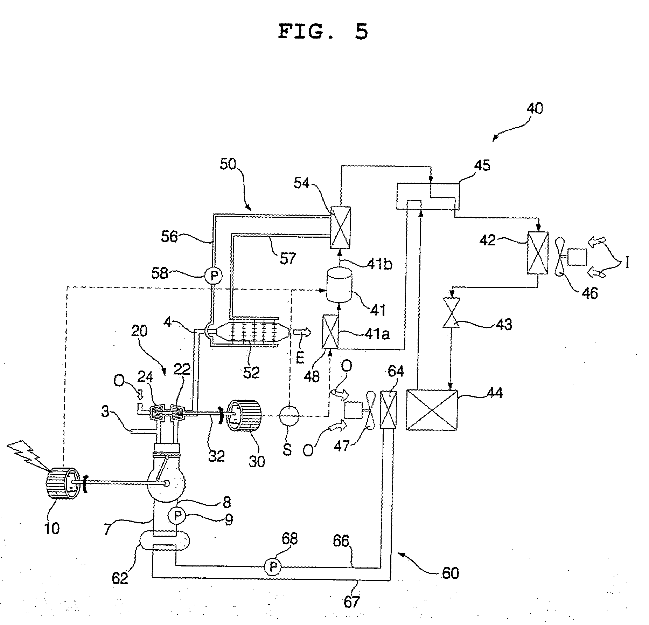

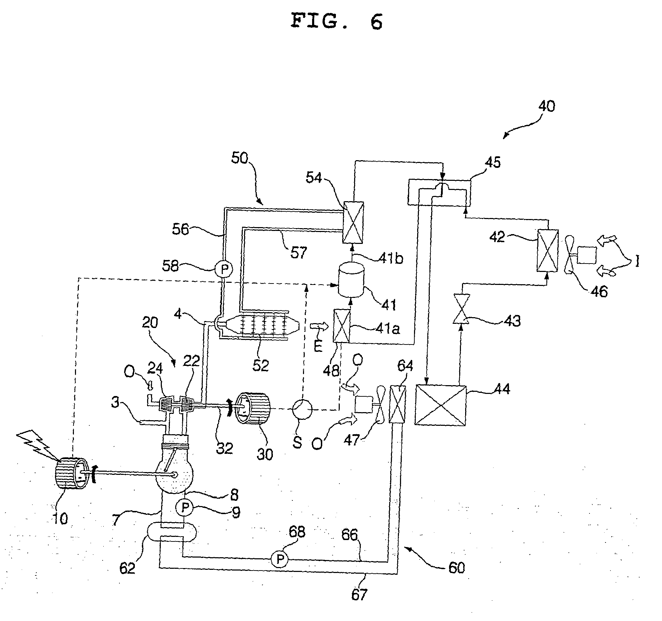

FIG. 5 is a schematic diagram of an electricity generating and air conditioning system according to a third embodiment of the present invention, illustrating a state in which the system operates in a heating mode. FIG. 6 is a schematic diagram of the electricity generating and air conditioning system according to the third embodiment of the present invention, illustrating a state in which the system operates in a cooling mode.

As shown in FIGS. 5 and 6, the electricity generating and air conditioning system includes an exhaust gas waste heat recovering means 50 to recover heat of exhaust gas discharged from an engine 2 and to heat a refrigerant passing through a discharge line 41b of a compressor 41, using the recovered exhaust gas heat, and a cooling water waste heat recovering means 60 to recover heat of cooling water used to cool the engine 2 and to pre-heat air blown to an outdoor heat exchanger 44, using the recovered cooling water heat.

The exhaust gas waste heat recovering means 50 includes an exhaust gas waste heat recovering heat exchanger 52 to recover the heat of the exhaust gas discharged from the engine 2, and a compressor discharge line heater 54 to heat a refrigerant passing through the discharge line 41b of the compressor 41, using the heat recovered by the exhaust gas waste heat recovering heat exchanger 52.

The exhaust gas waste heat recovering heat exchanger 52 is arranged at an outlet of an exhaust tube 4, through which the exhaust gas discharged from the engine 2 passes, such that the exhaust gas emerging from the outlet of the exhaust tube 4 passes through the exhaust gas waste heat recovering heat exchanger 52.

The exhaust gas waste heat recovering means 50 also includes circulation conduits 56 and 57, which connect the exhaust gas waste heat recovering heat exchanger 52 and the compressor discharge line heater 54 to guide a heat medium emerging from the exhaust gas waste heat recovering heat exchanger 52 such that the heat medium is circulated into the exhaust waste heat recovering heat exchanger 52 after absorbing heat from the exhaust gas in the exhaust gas waste heat recovering heat exchanger 52 and subsequently heating the refrigerant in the compressor discharge line heater 54.

The exhaust gas waste heat recovering means 50 further includes a heat medium circulation pump 58 directly connected to one of the circulation conduits 56 and 57 for the circulation of the heat medium.

The cooling water waste heat recovering means 60 includes a cooling water waste heat recovering heat exchanger 62 to recover heat of cooling water used to cool the engine 2, and a pre-heater 64 to pre-heat air blown to the outdoor heat exchanger 44, using the heat recovered by the cooling water waste heat recovering heat exchanger 62.

The cooling water waste heat recovering heat exchanger 62 is connected to the engine 2 via cooling water circulation conduits 7 and 8. A cooling water circulation pump 9 is connected to one of the engine 2, cooling water waste heat recovering heat exchanger 62, and cooling water circulation conduits 7 and 8.

The pre-heater 64 is arranged upstream from the outdoor heat exchanger 44 with respect to a flowing direction of outdoor air O blown toward the outdoor heat exchanger 44 to heat the blown outdoor air O.

The cooling water waste heat recovering means 60 also includes heat medium circulation conduits 66 and 67, which connect the cooling water waste heat recovering heat exchanger 62 and the pre-heater 64 to guide a heat medium emerging from the cooling water waste heat recovering heat exchanger 62 such that the heat medium is circulated into the cooling water waste heat recovering heat exchanger 62 after absorbing heat from the cooling water in the cooling water waste heat recovering heat exchanger 62 and subsequently heating the pre-heater 64.

The cooling water waste heat recovering means 60 further includes a heat medium circulation pump 68 directly connected to one of the circulation conduits 66 and 67 for the circulation of the heat medium.

The electricity generating and air conditioning system of the third embodiment has the same configuration and functions as those of the first embodiment, in terms of the engine 2, first generator 10, turbo charger 20, air conditioner 40, heater 48, electricity supply switch S, etc, except for the exhaust gas waste heat recovering means 50 and cooling water waste heat recovering means 60. Accordingly, the constituent elements of the third embodiment respectively corresponding to those of the first embodiment are designated by the same reference numerals, and no detailed description thereof will be given.

In a heating operation of the air conditioner 20 in the electricity generating and air conditioning system having the above-described arrangement according to the third embodiment, the directional valve 45 is switched to a heating mode. In this case, the heat medium circulation pump 58 is driven for recovery of waste heat of exhaust gas, and the cooling water circulation pump 9 and heat medium circulation pump 68 are driven for recovery of waste heat of cooling water. The compressor 41 and heater 48 are also driven, using electricity generated from the first and second generators 10 and 30.

The switching operation of the directional valve 45 to the heating mode, the refrigerant circulation achieved in accordance with the operation of the compressor 41, and the heating operation achieved in accordance with the refrigerant circulation are the same as those in the first embodiment, so that no detailed description thereof will be given.

When the heat medium circulation pump 58 operates, the heat medium, which has been heated by exhaust gas in the exhaust gas waste heat recovering heat exchanger 52, is fed to the compressor discharge line heater 54 via the heat medium circulation conduit 58, so that the heat medium releases heat into the compressor discharge line heater 54. Thereafter, the heat medium is circulated into the exhaust gas waste heat recovering heat exchanger 52 via the heat medium circulation conduit 57.

During the circulation of the heat medium, the compressor discharge line heater 54 heats high-temperature and high-pressure refrigerant gas passing through the discharge line 41b of the compressor 41 after being compressed by the compressor 41. The heated refrigerant emerging from the compressor discharge line heater 54 passes through the indoor heat exchanger 42 via the directional valve 45, thereby increasing indoor temperature over the case in which the refrigerant is not heated by the compressor discharge line heater 54.

Meanwhile, when the cooling water circulation pump 9 operates, the cooling water, which has been heated while cooling the engine 2, is fed to the cooling water waste heat recovering heat exchanger 62 via the cooling water circulation conduit 8, so that the cooling water releases heat into the cooling water waste heat recovering heat exchanger 62. Thereafter, the cooling water is circulated into the engine 2 via the cooling water circulation conduit 7.

When the heat medium circulation pump 68 operates, the heat medium, which has been heated by exhaust gas in the cooling water waste heat recovering heat exchanger 62, is fed to the pre-heater 64 via the heat medium circulation conduit 66, so that the heat medium releases heat into the pre-heater 64. Thereafter, the heat medium is circulated into the cooling water waste heat recovering heat exchanger 62 via the heat medium circulation conduit 67.

During the circulation of the heat medium, outdoor air O blown toward the outdoor heat exchanger 44 passes through the outdoor heat exchanger 44 after being heated by the pre-heater 64. As a result, the outdoor heat exchanger 44 is prevented from being frosted.

On the other hand, in a cooling operation of the air conditioner 20, the directional valve 45 is switched to a cooling mode. In this case, the cooling water circulation pump 9 is driven. Also, the compressor 41 is driven, using electricity generated from the first and second generators 10 and 30, whereas the heat medium circulation pump 58, heat medium circulation pump 68 and heater 48 do not operate.

The switching operation of the directional valve 45 to the cooling mode, the refrigerant circulation achieved in accordance with the operation of the compressor 41, and the cooling operation achieved in accordance with the refrigerant circulation are the same as those in the first embodiment, so that no detailed description thereof will be given.

Exhaust gas discharged from the engine transfers heat to the exhaust gas waste heat recovering heat exchanger 52 while passing through the exhaust gas waste heat recovering heat exchanger 52. The exhaust gas waste heat recovering heat exchanger 52 releases the heat absorbed from the exhaust gas to the atmosphere.

Also, cooling water used to cool the engine 2 transfers heat to the cooling water waste heat recovering heat exchanger 62 while being circulated through the cooling water waste heat recovering heat exchanger 62 and engine 2, as in the heating operation. The cooling water waste heat recovering heat exchanger 62 releases the heat absorbed from the cooling water to the atmosphere.

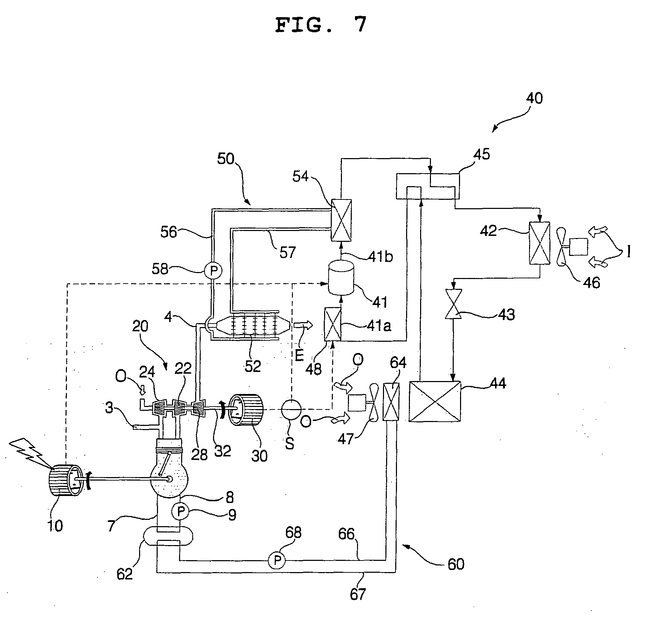

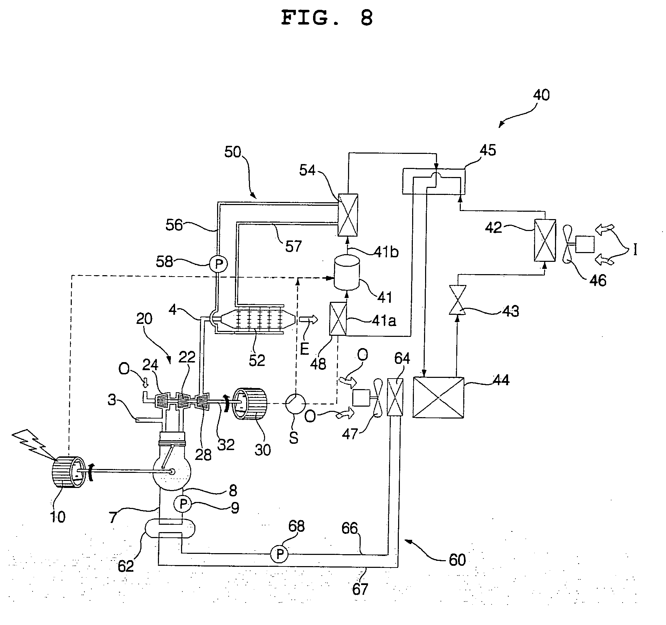

FIG. 7 is a schematic diagram of an electricity generating and air conditioning system according to a fourth embodiment of the present invention, illustrating a state in which the system operates in a heating mode. FIG. 8 is a schematic diagram of the electricity generating and air conditioning system according to the fourth embodiment of the present invention, illustrating a state in which the system operates in a cooling mode.

As shown in FIGS. 7 and 8, the electricity generating and air conditioning system includes an exhaust gas waste heat recovering means 50 to recover heat of exhaust gas discharged from an engine 2 and to heat a refrigerant passing through a discharge line 41b of a compressor 41, using the recovered exhaust gas heat, and a cooling water waste heat recovering means 60 to recover heat of cooling water used to cool the engine 2 and to pre-heat air blown to an outdoor heat exchanger 44, using the recovered cooling water heat.

The electricity generating and air conditioning system of the fourth embodiment has the same configuration and functions as those of the second embodiment, in terms of the engine 2, first generator 10, turbo charger 20, electricity-generating turbine 28, second generator 30, air conditioner 40, heater 48, electricity supply switch S, etc, except for the exhaust gas waste heat recovering means 50 and cooling water waste heat recovering means 60. Accordingly, the constituent elements of the fourth embodiment respectively corresponding to those of the second embodiment are designated by the same reference numerals, and no detailed description thereof will be given. The exhaust gas waste heat recovering means 50 and cooling water waste heat recovering means 60 are identical to those of the third embodiment, so that no detailed description thereof will be given.

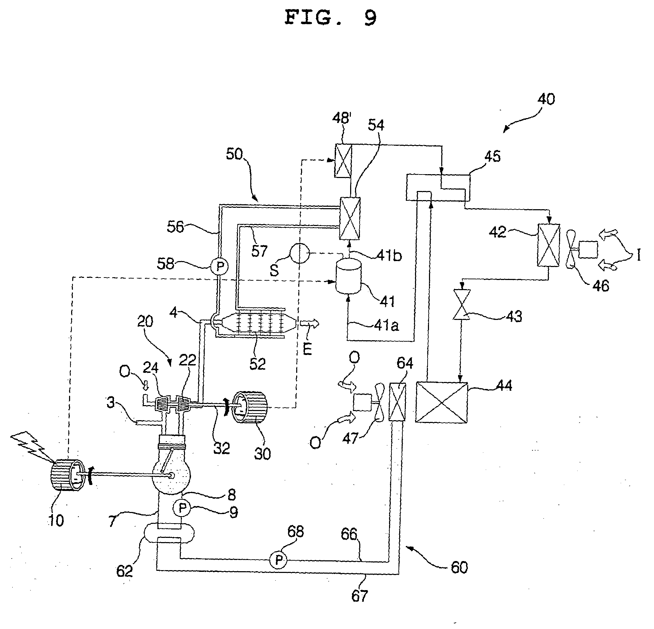

FIG. 9 is a schematic diagram of an electricity generating and air conditioning system according to a fifth embodiment of the present invention, illustrating a state in which the system operates in a heating mode.

As shown in FIG. 9, the electricity generating and air conditioning system includes a heater 48' to heat a refrigerant passing through a discharge line 41b of the compressor 41. The electricity generating and air conditioning system of the fifth embodiment has the same configuration and functions as those of the first embodiment or third embodiment, except for the heater 48'. Accordingly, the constituent elements of the fifth embodiment respectively corresponding to those of the first embodiment or third embodiment are designated by the same reference numerals, and no detailed description thereof will be given.

In the electricity generating and air conditioning system of this embodiment, the refrigerant, which passes through the discharge line 41b of the compressor 41 during a heating operation of the heat pump type air conditioner 20, is heated, so that the heating performance of the indoor heat exchanger 42 is enhanced.

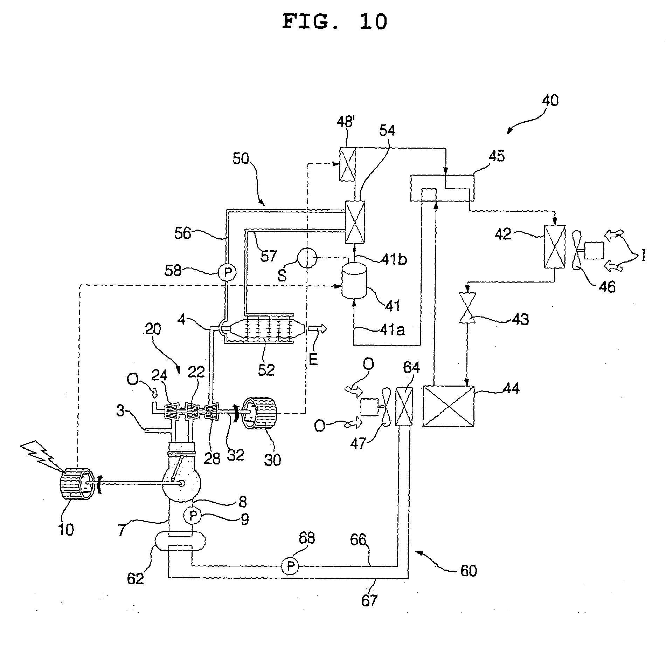

FIG. 10 is a schematic diagram of an electricity generating and air conditioning system according to a sixth embodiment of the present invention, illustrating a state in which the system operates in a heating mode.

As shown in FIG. 10, the electricity generating and air conditioning system includes a heater 48' to heat a refrigerant passing through a discharge line 41b of the compressor 41. The electricity generating and air conditioning system of the sixth embodiment has the same configuration and functions as those of the second embodiment or fourth embodiment, except for the heater 48'. Accordingly, the constituent elements of the sixth embodiment respectively corresponding to those of the second embodiment or fourth embodiment are designated by the same reference numerals, and no detailed description thereof will be given.

In the electricity generating and air conditioning system of this embodiment, the refrigerant, which passes through the discharge line 41b of the compressor 41 during a heating operation of the heat pump type air conditioner 20, is heated, so that the heating performance of the indoor heat exchanger 42 is enhanced.

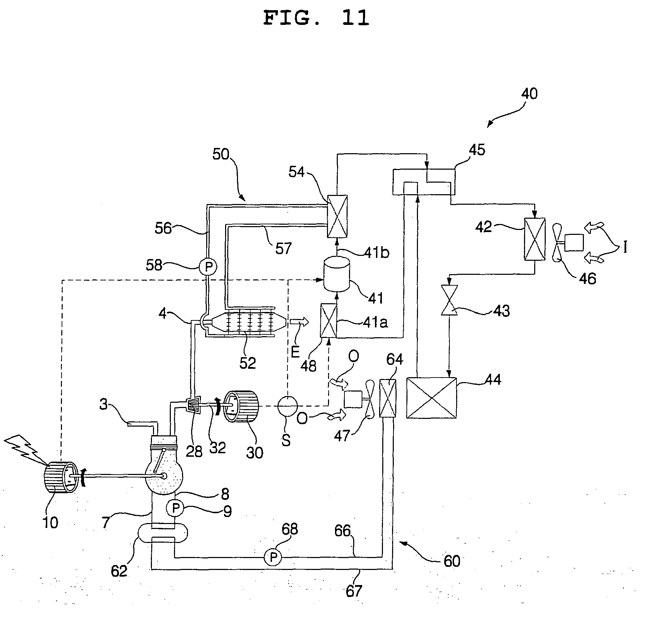

FIG. 11 is a schematic diagram of an electricity generating and air conditioning system according to a seventh embodiment of the present invention, illustrating a state in which the system operates in a heating mode.

As shown in FIG. 11, the electricity generating and air conditioning system includes an engine 2, a first generator 10 connected to an output shaft of the engine 2 to generate electricity, an electricity-generating turbine 28 to be rotated by exhaust gas discharged from the engine, a second generator 30 connected to the electricity-generating turbine 28 to generate electricity, and an air conditioner 40, which uses the electricity generated from at least one of the first and second generators 10 and 30, and includes a compressor 41, an inner heat exchanger 42, an expansion device 43, and an outdoor heat exchanger 44. The electricity generating and air conditioning system also includes a heater 48 to pre-heat a refrigerant passing through a suction line 41a of the compressor 41, using the electricity generated from at least one of the first and second generators 10 and 30.

The electricity-generating turbine 28 is arranged at an exhaust tube 4 connected to the engine 2 such that the electricity-generating turbine 28 is rotated by exhaust gas passing through the exhaust tube 4.

The electricity generating and air conditioning system further includes an exhaust gas waste heat recovering means 50 to recover heat of exhaust gas discharged from an engine 2 and to heat a refrigerant passing through a discharge line 41b of the compressor 41, using the recovered exhaust gas heat, and a cooling water waste heat recovering means 60 to recover heat of cooling water used to cool the engine 2 and to pre-heat air blown to an outdoor heat exchanger 44, using the recovered cooling water heat.

The electricity generating and air conditioning system of the seventh embodiment has the same configuration and functions as those of any one of the first through fourth embodiments, in terms of the engine 2, etc., except for the electricity-generating turbine 28. Accordingly, the constituent elements of the seventh embodiment respectively corresponding to those of any one of the first through fourth embodiment are designated by the same reference numerals, and no detailed description thereof will be given.

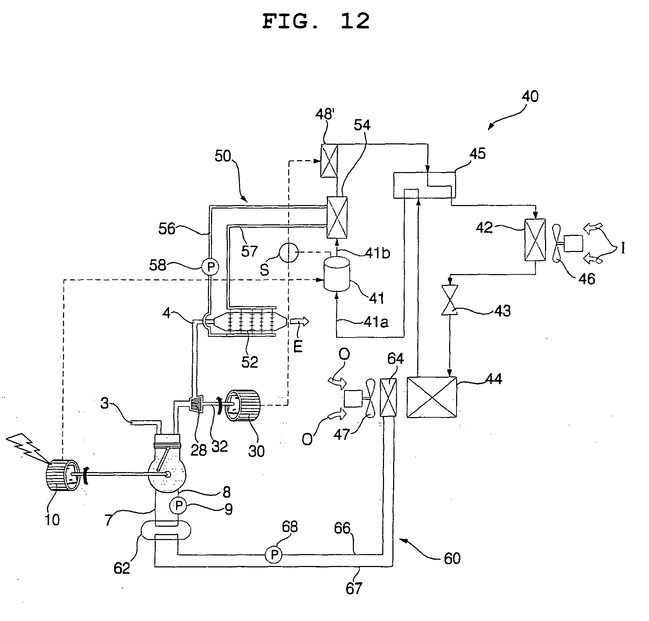

FIG. 12 is a schematic diagram of an electricity generating and air conditioning system according to an eighth embodiment of the present invention, illustrating a state in which the system operates in a heating mode.

As shown in FIG. 12, the electricity generating and air conditioning system includes a heater 48' to heat a refrigerant passing through a discharge line 41b of the compressor 41. The electricity generating and air conditioning system of the eighth embodiment has the same configuration and functions as those of the fifth embodiment, except for the heater 48'. Accordingly, the constituent elements of the eighth embodiment respectively corresponding to those of the fifth embodiment are designated by the same reference numerals, and no detailed description thereof will be given.

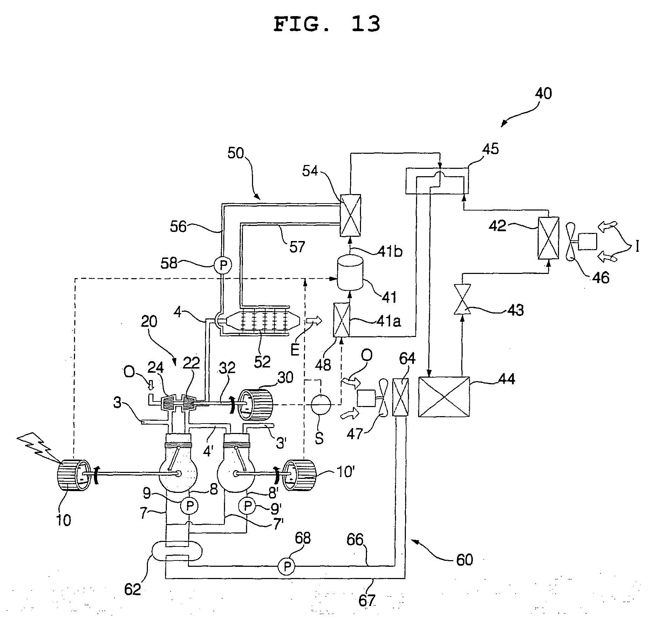

FIG. 13 is a schematic diagram of an electricity generating and air conditioning system according to a ninth embodiment of the present invention, illustrating a state in which the system operates in a heating mode.

As shown in FIG. 13, the electricity generating and air conditioning system includes a plurality of engines 2, 2'.... The electricity generating and air conditioning system also includes a plurality of generators 10, 10'... connected to respective shafts of the engines 2, 2'.... The electricity generating and air conditioning system of the ninth embodiment has the same configuration and functions as those of the first through fourth embodiments, except for the engines 2, 2'... and generators 10, 10'.... Accordingly, the constituent elements of the ninth embodiment respectively corresponding to those of the first through fourth embodiments are designated by the same reference numerals, and no detailed description thereof will be given.

One or more of the engines 2, 2'... operate in accordance with the load to be cooled or heated.

Fuel tubes 3, 3'... are connected to respective engines 2, 2'.... Also, pairs of cooling water circulation conduits 7 and 8, 7' and 8'... are connected to respective engines 2, 2'....

Exhaust gas tubes 4, 4'... are connected in parallel.

The cooling water circulation conduits 7 and 8, 7' and 8'... are connected in parallel.

Cooling water circulation pumps 9, 9'... are directly connected to the cooling water circulation conduit 7 or 8, cooling water circulation conduit 7' or 8'..., respectively.

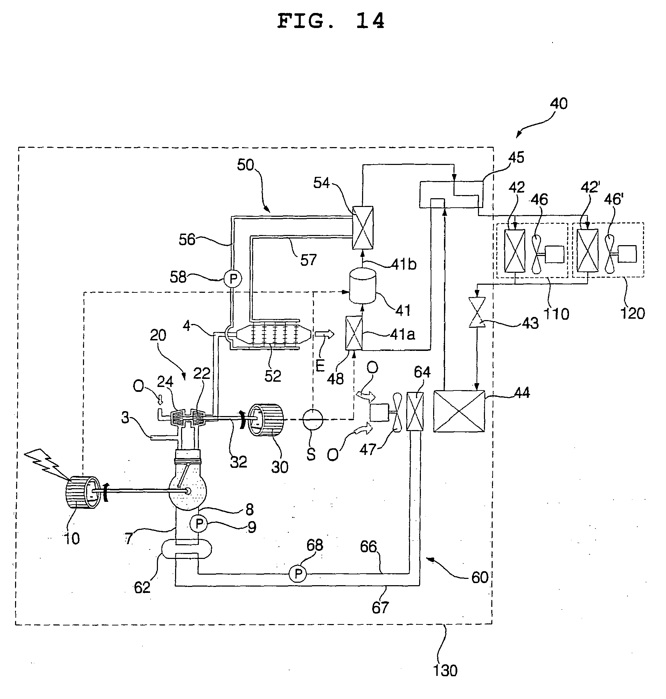

FIG. 14 is a schematic diagram of an electricity generating and air conditioning system according to a tenth embodiment of the present invention, illustrating a state in which the system operates in a heating mode.

As shown in FIG. 14, the air conditioner, that is, the air conditioner 40, which is included in the electricity generating and air conditioning system, is of a multi-type. That is, the air conditioner 40 includes a plurality of indoor units 110, 120..., and a single outdoor unit 130. The indoor units 110, 120... include indoor heat exchangers 42, 42'..., which are connected in parallel, respectively. The electricity generating and air conditioning system of this embodiment has the same configuration and functions as those of any one of the first through fourth embodiments, except that the air conditioner 40 includes a plurality of indoor units 110, 120..., and thus, a plurality of indoor heat exchangers 42, 42'.... Accordingly, the constituent elements of the tenth embodiment respectively corresponding to those of any one of the first through fourth embodiments are designated by the same reference numerals, and no detailed description thereof will be given.

The indoor units 110, 120... also include indoor blowers 46, 46'..., respectively.

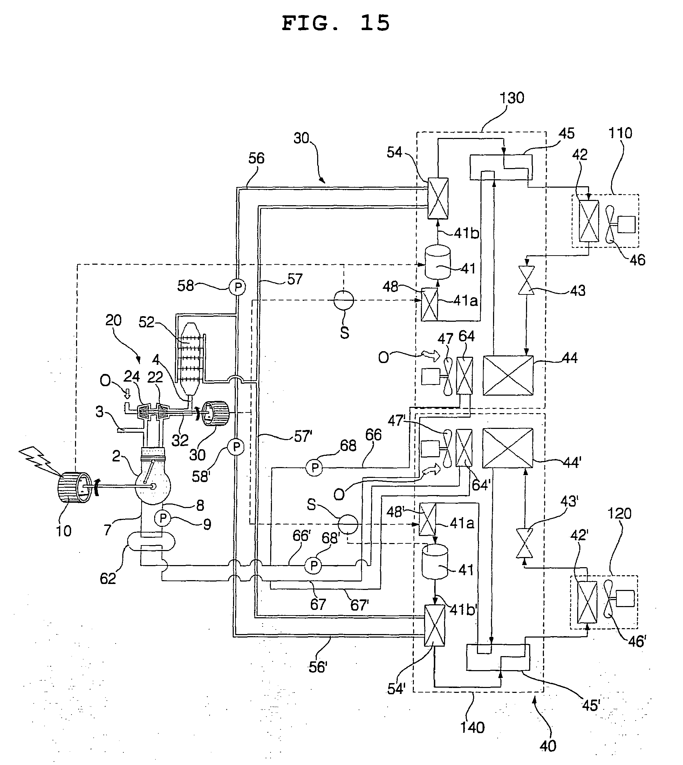

FIG. 15 is a schematic diagram of an electricity generating and air conditioning system according to an eleventh embodiment of the present invention, illustrating a state in which the system operates in a heating mode.

As shown in FIG. 15, the electricity generating and air conditioning system according to this embodiment includes an engine 2, a first generator 10 connected to an output shaft of the engine 2 to generate electricity, a turbo charger 20, which includes a turbine 22 to be rotated by exhaust gas discharged from the engine 2, a second generator 30 connected to the turbine 22 to generate electricity, and an air conditioner 40, which uses the electricity generated from at least one of the first and second generators 10 and 30, and includes a plurality of indoor units 110, 120..., and a plurality of outdoor units 130, 140.... The electricity generating and air conditioning system also includes heaters 48, 48'... respectively arranged in respective outdoor units 130, 140... to pre-heat refrigerant passing through respective suction lines 41a of the compressors 41, 41' included in the outdoor units 130, 140..., using the electricity generated from at least one of the first and second generators 10 and 30, an exhaust gas waste heat recovering heat exchanger 52 to recover heat of exhaust gas discharged from the engine 2, and a plurality of compressor discharge line heaters 54, 54'... respectively arranged in the outdoor units 130, 140... to heat refrigerant passing through respective discharge lines 41b, 41b'... of compressors 41, 41'... arranged in respective outdoor units 130, 140..., using the heat recovered by the exhaust gas waste heat recovering heat exchanger 52. The electricity generating and air conditioning system further includes a cooling water waste heat recovering heat exchanger 62 to recover heat of cooling water used to cool the engine 2, and a plurality of pre-heaters 64, 64'... respectively arranged in the outdoor units 130, 140... to pre-heat air blown to respective outdoor heat exchangers 44, 44'... of the outdoor units 130, 140..., using the heat recovered by the cooling water waste heat recovering heat exchanger 62. The electricity generating and air conditioning system of this embodiment has the same configuration and functions as those of the first through fourth embodiments, except for a plurality of indoor units 110, 120..., and a plurality of outdoor units 130, 140.... Accordingly, the constituent elements of the eleventh embodiment respectively corresponding to those of the first through fourth embodiments are designated by the same reference numerals, and no detailed description thereof will be given.

The indoor units 110, 120... include respective indoor heat exchangers 42, 42'..., and respective indoor blowers 46, 46'....

The outdoor units 130, 140... include respective compressors 41, 41'..., directional valves 45, 45'..., respective expansion devices 43, 43'..., respective outdoor heat exchangers 44, 44'..., outdoor blowers 47, 47'..., heaters 48, 48', compressor discharge line heaters 54, 54'..., and respective pre-heaters 64, 64' ....

In the air conditioner 40, refrigerant conduits respectively included in the indoor units 110, 120... may be connected in parallel. Refrigerant conduits respectively included in the outdoor units 130. 140... may also be connected in parallel. The following description will be given in conjunction with the case in which each of the outdoor units 130, 140... are connected to an associated one of the indoor units 110, 120... to constitute one air conditioner set, and each air conditioner set operates independently of other air conditioner sets.

Pairs of heat medium circulation conduits 56 and 57, 56' and 57'... are arranged between the exhaust gas waste heat recovering heat exchanger 52 and respective compressor discharge line heaters 54, 54'... to connect the exhaust gas waste heat recovering heat exchanger 52 and respective compressor discharge line heaters 54, 54'.... Heat medium circulation pumps 58, 58'... are directly connected to respective pairs of heat medium circulation conduits 56 and 57, 56' and 57'....

After absorbing heat from exhaust gas in the exhaust gas waste heat recovering heat exchanger 52, the heat medium may be distributed to all compressor discharge line heaters 54, 54'.... to enhance the heating performances of the indoor units 110, 120.... Alternatively, the heat medium may be supplied to only the compressor discharge line heater of the currently-operating outdoor unit, for example, the compressor discharge line heater 54 of the outdoor unit 130. In this case, it is possible to concentratedly enhance the heating performances of the indoor unit 110 connected to the currently-operating outdoor unit 130.

The heat medium circulation conduits 56 and 57, 56' and 57'... are connected in parallel.

Pairs of heat medium circulation conduits 66 and 67, 66' and 67'... are arranged between the cooling water waste heat recovering heat exchanger 62 and respective pre-heaters 64, 64'... to connect the cooling water waste heat recovering heat exchanger 62 and respective pre-heaters 64, 64'.... Heat medium circulation pumps 68, 68'... are directly connected to respective pairs of heat medium circulation conduits 66 and 67, 66' and 67' ....

The heat medium circulation conduits 66 and 67, 66' and 67'... are connected in parallel.

After absorbing heat from cooling water in the cooling water waste heat recovering heat exchanger 62, the heat medium may be distributed to all pre-heaters 64, 64'... to prevent all outdoor heat exchangers 44, 44'... from being frosted. Alternatively, the heat medium may be supplied to only the pre-heater of the currently-operating outdoor unit, for example, the pre-heater 64 of the outdoor unit 130. In this case, it is possible to prevent the outdoor heat exchanger 44 of the currently-operating outdoor unit 130 from being frosted.

As apparent from the above description, the electricity generating and air conditioning system according to the present invention has an advantage in that the first generator coupled to the output shaft of the engine generates electricity, the turbo charger is operated by exhaust gas discharged from the engine, to enhance the power of the engine, and the second generator coupled to the turbo charger generates electricity, so that it is possible to achieve an enhancement in energy efficiency.

In the electricity generating and air conditioning system according to the present invention, the first generator coupled to the output shaft of the engine generates electricity. The turbo charger is operated by exhaust gas discharged from the engine, to enhance the power of the engine. Also, the exhaust gas used to operate the turbo charger also may rotate the electricity-generating turbine, so that the second generator coupled to the electricity-generating turbine generates electricity. Accordingly, it is possible to minimize the load of the turbo charger and to achieve an enhancement in energy efficiency.

The electricity generating and air conditioning system according to the present invention also has an advantage in that heat of the exhaust gas discharged from the engine is recovered, and is supplied to the discharge line of the compressor, to heat a refrigerant passing through the compressor discharge line, so that an improvement in the heating performance of the indoor heat exchanger is achieved.

The electricity generating and air conditioning system according to the present invention also has an advantage in that heat of cooling water used to cool the engine is recovered to pre-heat air blown to the outdoor heat exchanger, so that it is possible to prevent the outdoor heat exchanger from being frosted, and to achieve an enhancement in heating performance.

The electricity generating and air conditioning system according to the present invention includes a heater to pre-heat a refrigerant passing through the suction line of the compressor, using the electricity generated from at least one of the first and second generators, so that it is possible to enhance the heating performance of the indoor heat exchanger or to reduce the power consumption of the compressor in accordance with the pre-heating operation of the pre-heater.

Although the preferred embodiments of the invention have been disclosed for illustrative purposes, those skilled in the art will appreciate that various modifications, additions and substitutions are possible, without departing from the scope and spirit of the invention as disclosed in the accompanying claims.

## Claims

1. An electricity generating and air conditioning system comprising:
an engine;
a first generator connected to an output shaft of the engine to generate electricity;
a turbo charger including a turbine to be rotated by exhaust gas discharged from the engine;
a second generator connected to the turbine to generate electricity; and
an air conditioner, which uses the electricity generated from at least one of the first and second generators and includes a compressor, an indoor heat exchanger, an expansion device, and an outer heat exchanger.

2. An electricity generating and air conditioning system comprising:
an engine;
a first generator connected to an output shaft of the engine to generate electricity;
a turbo charger including a turbine to be rotated by exhaust gas discharged from the engine;
an electricity-generating turbine to be rotated by the exhaust gas emerging from the turbo charger;
a second generator connected to the electricity-generating turbine to generate electricity; and
an air conditioner, which uses the electricity generated from at least one of the first and second generators and includes a compressor, an indoor heat exchanger, an expansion device, and an outer heat exchanger.

3. An electricity generating and air conditioning system comprising:
an engine;
a first generator connected to an output shaft of the engine to generate electricity;
an electricity-generating turbine to be rotated by exhaust gas discharged from the engine;
a second generator connected to the electricity-generating turbine to generate electricity; and
an air conditioner, which uses the electricity generated from at least one of the first and second generators and includes a compressor, an indoor heat exchanger, an expansion device, and an outer heat exchanger.

4. The electricity generating and air conditioning system according to any one of claims 1 to 3, further comprising:
a heater to heat a refrigerant passing through a suction line of the compressor or a discharge line of the compressor, using the electricity generated from at least one of the first and second generators.

5. The electricity generating and air conditioning system according to any one of claims 1 to 3, further comprising:
exhaust gas waste heat recovering means to recover heat of the exhaust gas discharged from the engine and to heat a refrigerant passing through a discharge line of the compressor, using the recovered heat.

6. The electricity generating and air conditioning system according to any one of claims 1 to 3, further comprising:
cooling water waste heat recovering means to recover heat of cooling water used to cool the engine and to pre-heat air blown to the outdoor heat exchanger, using the recovered heat.

7. The electricity generating and air conditioning system according to any one of claims 1 to 3, further comprising:
a heater to heat a refrigerant passing through a suction line of the compressor or a discharge line of the compressor, using the electricity generated from at least one of the first and second generators; and
exhaust gas waste heat recovering means to recover heat of the exhaust gas discharged from the engine and to heat the refrigerant passing through the discharge line of the compressor, using the recovered heat.

8. The electricity generating and air conditioning system according to any one of claims 1 to 3, further comprising:
a heater to heat a refrigerant passing through a suction line of the compressor or a discharge line of the compressor, using the electricity generated from at least one of the first and second generators; and
cooling water waste heat recovering means to recover heat of cooling water used to cool the engine and to pre-heat air blown to the outdoor heat exchanger, using the recovered heat.

9. The electricity generating and air conditioning system according to any one of claims 1 to 3, further comprising:
exhaust gas waste heat recovering means to recover heat of the exhaust gas discharged from the engine and to heat a refrigerant passing through a discharge line of the compressor, using the recovered exhaust gas heat; and
cooling water waste heat recovering means to recover heat of cooling water used to cool the engine and to pre-heat air blown to the outdoor heat exchanger, using the recovered cooling water heat.

10. The electricity generating and air conditioning system according to any one of claims 1 to 3, further comprising:
a heater to heat a refrigerant passing through a suction line of the compressor or a discharge line of the compressor, using the electricity generated from at least one of the first and second generators;
exhaust gas waste heat recovering means to recover heat of the exhaust gas discharged from the engine and to heat the refrigerant passing through the discharge line of the compressor, using the recovered exhaust gas heat; and
cooling water waste heat recovering means to recover heat of cooling water used to cool the engine and to pre-heat air blown to the outdoor heat exchanger, using the recovered cooling water heat.

11. The electricity generating and air conditioning system according to any one of claims 1 to 3, wherein the air conditioner is a heat pump type air conditioner.

12. The electricity generating and air conditioning system according to any one of claims 1 to 3, wherein at least one of the engine, the first generator, the second generator, the outdoor heat exchanger, and the indoor heat exchanger comprises a plurality of ones.
